# EUROPEAN PATENT APPLICATION

(11) **EP 4 567 009 A1**
(43) Date of publication of application: **11.06.2025**
(21) Application number: 24217048.8
(22) Date of filing: 03.12.2024
(51) Int. Cl.: C03B 27/04, C03B 29/08

(54) **METHOD FOR CONTROLLING THE THERMAL TEMPERING OF GLASS SHEETS AND DEVICE FOR RELATIVE IMPLEMENTATION**

(30) Priority: 04.12.2023 IT 202300025773
(71) Applicant: Glass Company S.r.l., 61122 Pesaro (PU) (IT)
(72) Inventor: BERNABUCCI, Claudio, 61122 Pesaro (IT)
(74) Representative: Benedetti, Gianluca

(57) **Abstract**

Method for controlling the thermal tempering of glass sheets in thermal tempering devices consisting of a roller units (2) for consecutively conveying sheets (3) through a tunnel (1) with a first heating area (4) and a second sudden cooling area (5), comprising the steps adjusted and controlled by an electronic logic (15) of: dividing the heating area (5) into consecutive sections (6, 7, 8); subjecting each section (6, 7, 8) of the conveying line (2) of the cooling area (5) to a detection area (21) for acoustic and/or mechanical vibration detection devices; selectively detecting vibration peaks generated by the breakage of glass (3) during cooling in each detection area (21); electronically processing the detections of the various vibration detectors (20) to identify the detector (20) which maximised the vibration detection; blocking or not blocking the advancement process of the sheets (3) on the roller unit (2) as a function of pre-set parameters; reporting to the operator the detection with visual and/or acoustic means (22); indicating to the operator the detection section (6, 7, 8) with visual means (22) including reproduction on a screen (15) of the reference detection area (21); deactivating and reactivating control functions for targeted interventions for cleaning the section (6, 7, 8) and removing the broken sheet; storage in a database of the detection in an interpolated fashion with the production parameters and relevant interpretation;
device for implementing the method comprising:
a plurality of vibration detection means (20) with respective detection fields (21) consisting of consecutive sections (6, 7, 8) of the chamber (19) of the roller conveying line (2) of the cooling area (5) of a tunnel (1) for thermal tempering the glass (3); electronic means for processing the vibration detections in the detection fields (21); signalling to the external (22) the occurrence of vibration peaks overcoming the functional physiological vibration level in the detection fields (21), electronic means for comparing the vibration detections of the various detectors to identify the predominant detection; means for possibly blocking the tempering process and specific reference at whose external the detection field (21) was subject of the predominant detection; means for electrically storing the detections on the detection fields and comparison with other tempering process parameters detected according to the prior art; adjustment and control electronic means for the automated implementation of the method steps.

## Description

### Field of the art

The thermal tempering of glass is obtained by subjecting the sheets to heating and then sudden cooling. This results in the formation of micro-fractures inside the sheet material which, sealing together, make it more resistant and subject to shattering into sharp fragments, if it breaks; as a matter of fact, the thermal shock generates on the surface of the sheet a "compression" condition, which produces an improvement of the mechanical strength and should the hardened layer be damaged, the tempered glass could break into small fragments that are not a source of hazard.

For this reason, and due to its great mechanical strength, it is called "safety glass" and is widely used in glazing and in the automotive industry.

However, the thermal shock and the resulting induced tensions may also cause cracks, which in a certain small percentage is substantially physiological, of the slabs during the tempering method, which is carried out industrially in tunnels traversed by the sheets advanced in succession on conveyor roller units, comprising in a first area an electric furnace adapted to homogeneously heat the slabs on both sides and then a cooling area, carried out air jets which impact the sheets on the two faces, which are carried to the immediate vicinity of the faces of the nozzles.

When a glass sheet breaks due to a cooling thermal shock, the operator is forced to stop the plant and in any case to search for the broken sheet and the location on the conveyor line where the break occurred, in order to find the granular fragments that might fall under the roller unit and are stuck between the rollers and the lower blowers and then clean the whole and resume the production cycle.

This is not easy, let alone immediate, since it is not known where the break occurred within the tunnel, which is rather long in modern plants, and therefore operators are forced to remove the panels defining the tunnel until they know where the glass broke.

It being understood that the prior art closest to the solution concept of the technical problem mentioned above and described below is represented by:
the United States Patent No. US4076511A dated 28 February 1978 on behalf of Robert C. Fulton et al. ;
the United States Patent application No. US2023/212055A1 published on 6 July 2023 on behalf of Jarmo T. Pylkkonen and others.

### Objects of the invention

In this context, the main object of the present invention is to streamline and speed up the detection of broken glass during cooling in the industrial implementation of the relative thermal tempering, as well as the related remedial actions.

Another object of the present invention is to achieve the preceding object through an innovation concept that can be applied to pre-existing production lines and not expressly designed to feature it.

Yet another object of the present invention is to achieve the preceding objects through an innovation concept whose control can be supplemented with the electronic systems for managing and controlling existing lines.

A further object of the present invention is to attain any one of the aforementioned objects through a method and a device for relative implementation that are simple and efficient, safe to use and relatively inexpensive considering the actual results attained therewith.

### Summary of the solution concept

All these and other objects are attained by the method for controlling the thermal tempering of the glass sheets according to the present invention, as defined by the claims, in the thermal tempering devices consisting of roller units for consecutively conveying the sheets through a tunnel with first heating area and second sudden cooling area for inducing tensions in the glass material which physiologically determines the tempering thereof, but they can unusually cause the breaking thereof, which leads to the shattering of the sheet into granules typical of the tempered glass, comprising the steps adjusted and controlled by an electronic logic of: dividing the cooling area into consecutive sections with reference to the conveying direction; subjecting each section of the conveying line of the cooling area to a detection area for vibration detection devices, both acoustic with microphones calibrated to the detection zero with respect to the background noise of the machine, and mechanical with vibration sensors calibrated to the detection zero with respect to the physiological vibrations of the machine; selectively detecting sound and/or vibration perturbation peaks generated by the breaking of the glass during cooling in each detection area; electronically processing the detections of the various acoustic and/or vibration detectors so as to compare them and identify the detector which maximised the detection of sound and/or vibration perturbation; block or not block the process for advancing the sheets on the roller unit as a function of the pre-set parameters; reporting to the operator the detection with visual and/or acoustic means; indicating to the operator the detection area with visual means including the reproduction on a screen of the reference detection area; deactivating and reactivating control functions for the targeted intervention for cleaning the section and removing the broken sheet; storing in a database the detection which can be interpolated with the production parameters and relative recordings and artificial intelligence;
as well as with the device for implementing the method for controlling the thermal tempering of the glass sheets according to the present invention even as defined by the claims, comprising: a plurality of mechanical acoustic and/or vibration detection means with respective detection fields consisting of consecutive sections of the chamber of the roller conveying line of the cooling area of a tunnel for thermal tempering the glass; electronic means for processing and comparing the mechanical acoustic and/or vibration detections vibration detections in the detection fields; means for signalling to the external the occurrence of sound perturbation peaks overcoming the background noise and/or mechanical vibration overcoming the functional physiological vibration in the detection fields; electronic means for comparing the mechanical acoustic and/or vibration detections of the various detectors to identify the predominant detection and/or detections in terms of intensity; means for possibly blocking the tempering process and specific reference at whose external the detection field was subject of the predominant detection; means for electronically storing the detections on the detection fields and comparison with other tempering process parameters detected according to the prior art; adjustment and control electronic means for the automated implementation and artificial intelligence implementation of the method steps.

### Description of the attached drawings

Further characteristics and advantages of the method for controlling the thermal tempering of glass sheets and the device for the relative implementation according to the present invention will be more apparent from the following detailed description of a preferred but non-exclusive embodiment thereof, shown solely by way of non-limiting example in the three attached drawings, wherein:
Figure 1 shows a top perspective view of a plant for the thermal tempering of glass schematically shown;
Figure 2 shows a schematic cross-section;
Figure 3 shows a schematic cross-section in plan view;
Figure 4 schematically shows the operation of a relative component.

### Static description of the embodiment

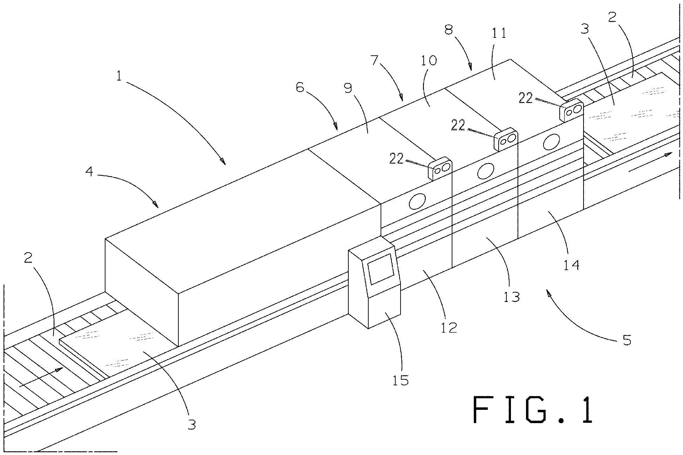

With reference to such figures and in particular to figure 1, a plant or tunnel for the thermal tempering of glass, arranged along a roller conveyor 2 for a consecution of glass sheets 3 is indicated in its entirety with 1.

The tunnel 1 comprises a first area 4 consisting of an electric furnace according to the prior art.

The tunnel 1 then comprises a second adjacent cooling area 5, divided into consecutive sections, for example three, 6, 7 and 8, of the type with division of respective compartments 9, 10 and 11 division of respective doors 12, 13 and 14 that can be opened independently.

Lastly, the tunnel 1 comprises an electronic control and monitoring centre, schematically shown relatively close thereto and indicated with 15, obviously also alternatively being suitable to be positioned in another place suitable for the purpose.

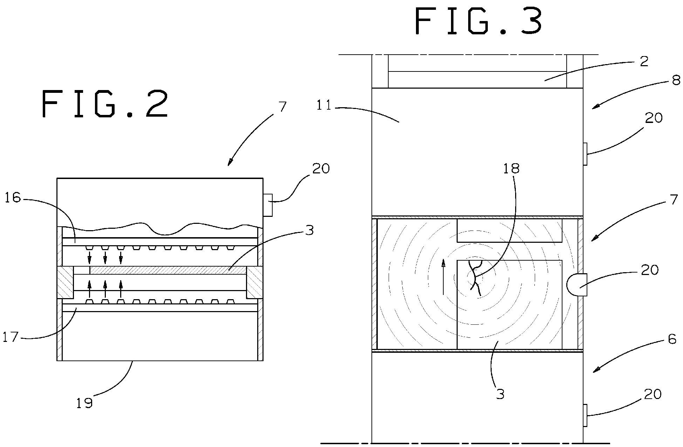

Figures 2 and 3 respectively show a broken cross-sectional view and a broken plan view, of the intermediate section 7, of the cooling area 5.

Schematically shown therein is the roller unit 2 with overlying glass sheet 3, interposed between upper 16 and lower 17 blowers that impact the glass 3 with pressurised air flows generated according to the prior art by turbines not shown and delivered thereto by pipes also not shown.

Schematically shown with 18 is a crack on a sheet 3, ideally representing the beginning of a thermal stress breaking that will develop degenerating into deflagration and shattering into dropping glass granules, which is typical of tempered glasses (or glass cracks wherein the tempering process is not triggered or completed) which drop on the surface 19 of the base of the tunnel 2, or on the decks with raised edges or trays, not shown, arranged on the surface 19 of the base, which can be removed to facilitate the cleaning thereof.

Shown with 20 is a device, for example an electronic control unit, for detecting acoustic vibrations, for example a microphone, and/or mechanical vibrations, for example a vibration sensor, and shown with 21 is the detection area where the sound and/or mechanical vibration detection device 20 is provided on a portion of the surface 19 of the base of the tunnel 2.

The acoustic and/or mechanical vibration detection device 20 may be of any type and kind suitable for the purpose according to the prior art, positioned individually or in any plurality wherein in this specific application, that is with reference to the specific furnace, sensitivity to vibrations is maximised.

Preferably, the device consists of an accelerometer and even more preferably of un monoaxial piezoelectric accelerometer, of the ICP type with 10 mV/g sensitivity and 0.5 at 10k Hz frequency range, mounted on magnetic base; without prejudice to using any kind and type of acoustic vibration detection device suitable for the purpose.

Said vibration sensors, preferably consisting of accelerometers, are arranged on the flat surface and/or on the edges of the aforementioned decks with raised edges or trays for collecting glass fragments that fall onto the roller unit.

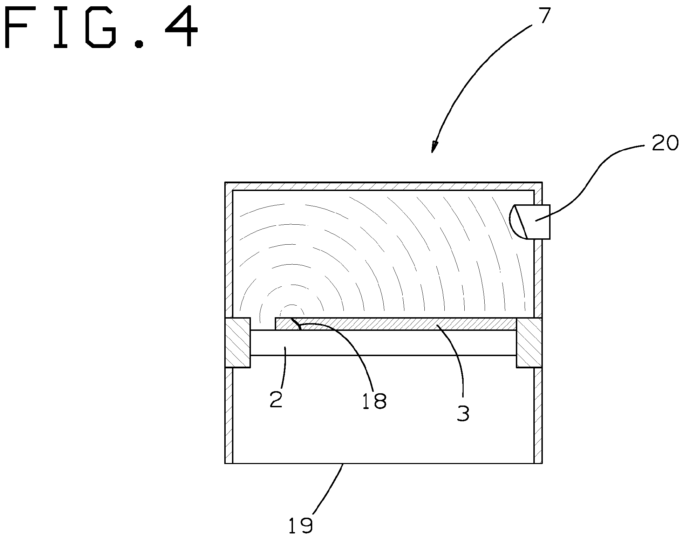

Figure 4 shows a broken cross-sectional view of any of the sections 6, 7 and 8 of the cooling area 5, with the cooling blowers removed, to show that all the sections follow the structure of the intermediate section 7 described above by way of example.

Shown with 22 are visual and possibly acoustic alarm devices respectively assembled and however referring to each section 6, 7 and 8 of the cooling area 5.

### Dynamic description of the embodiment

Thus, having completed the static description of preferred embodiments of the thermal tempering of the glass sheets according to the present invention, below is the dynamic description, or the relative operation, which in another approach corresponds to the method according to the present invention:
according to the prior art, the glass sheets 3 consecutively succeeding each other on the roller conveyor 2 enter into the furnace 4, passing through it being subjected to the heating according to the prior art to attain the thermal tempering until softening;
to the same end the glass sheets 3 then pass through in an immediately consecutive fashion in the cooling tunnel 7, where they are impacted by air jets flowing out from the succession of upper 16 and lower 17 blowers, being subjected - according to the prior art - to the sudden cooling which induces the surface tensions and subsequently the tempering when the method ends successfully.

Should the tensions not be limited to the physiological surface confinement, but lead to the breaking of the sheet 3 instead, graphically represented by the crack 18, the relative fragments following an immediate deflagration, shaped forming incoherent granules following tensions induced by the tempering, fall between the rollers of the conveyor 2 and the lower blowers 17, falling on the surface 19 of the base.

When the sheet tempering process is incomplete or not well triggered, the breaking could turn into more or less coarse cracks.

Such breaking and/or deflagrations of the sheet and the falling of the fragments or shrapnel inevitably make noise, that is a noise or sound perturbation peak with respect to the background noise of the machine;
such breaking and/or deflagrations of the sheet and falling of the fragments or shrapnel also induce unusual vibrations in the mechanics of the machine with respect to the physiological vibrations of the operation thereof;
the sound perturbation with respect to the background noise of the machine is selectively detected by all sound sensors or microphones 20 of the sections 6, 7 and 8 of the cooling area 5;
the vibration anomalies with respect to the physiological vibrations of the operation of the machine are selectively detected by all vibration sensors 20 of the sections 6, 7 and 8 of the cooling area 5.

In the drawings, the microphones and vibration detectors were indicated together in a control unit with the same reference numeral 20, however, the sound and vibration detection stations may be combined, like in the shown example, or divided and variously multiplied and distributed as a function of the actual functional maximisation of the sensors, preferably consisting of accelerometers.

The detections are reported to the management and control electronic unit 15, programmed to identify the detector 20 which maximised the mechanical sound and/or vibration perturbation detection, corresponding to the section 6, 7 or 8 of the cooling area 5 where the breaking occurred.

The advancement may be subsequently blocked, the sound and/or visual alarms 22 may be activated indicating the specific section 6, 7, 8 where the breaking occurred, and this can be displayed on the monitor 15 for the view of the operator.

Subsequently, the operator may, specifically, intervene on the section 6, 7, 8 of the cooling tunnel 5 where the breaking occurred, without the need for trying to guess the fraction where the break occurred, and therefore swiftly perform the required detection, cleaning and restoration operations by accessing by opening the relevant door 12, 13, 14.

The option of storing the breakage parameters in a database and also managing them with artificial intelligence enables to order and process the occurrences and anything else needed or suitable to identify specific criticalities with respect to other production parameters, so that the method according to the invention has positive impact also on the limitation of the sheet breaking events during tempering.

### Alternative embodiments

It is obvious that in further alternative embodiments still falling within the innovation concept subject of the embodiment illustrated above and claimed below, the method for controlling the thermal tempering of the glass sheets and the relative implementation device, according to the present invention, may be implemented through technical and mechanical equivalents, i.e. with further supplementary solutions, same case applying to all configurations of the relative components can be varied to suit the purpose.
in particular
the embodiment shown by way of example suggests three sections of the cooling tunnel, with three acoustic detectors and three respective detection fields; obviously, the sections, detection fields and acoustic detectors may be multiplied or reduced depending on the length of the tunnel and precision maximisation and instantaneous detection of the breakage.

### Advantages of the invention

As observable from the preceding detailed description of a preferred embodiment and from the description outlined above relating to some embodiments, the method for controlling the thermal tempering of glass sheets and the device of the relative implementation according to the present invention offer advantages corresponding to the attainment of these and other preset objects:
as a matter of fact they supplement a functional, modular and cost-effective method and device for the automated detection and identification of breakage on glass sheets in thermal tempering plants, which can be applied to pre-existing plants without the need for radical changes and adapted to provide detections such to allow to improve the production parameters and reduce the breaking of the sheets decreasing the physiological percentage of the phenomenon.

### KEY TO REFERENCE NUMBERS

- **1)**: horizontal furnace for tempering flat and curved glass in its entirety
- **2)**: roller conveyor
- **3)**: glass sheets
- **4)**: first area - electric furnace
- **5 )**: second sector - air cooling tunnel
- **6)**: first section of the cooling tunnel in its entirety
- **7)**: second section of the cooling tunnel in its entirety
- **8)**: third section of the cooling tunnel in its entirety
- **9)**: compartment of the first section of the cooling tunnel
- **10)**: compartment of the second section of the cooling tunnel
- **11)**: compartment of the third section of the cooling tunnel
- **12 )**: compartment door of the first section of the cooling tunnel
- **13 )**: compartment door of the second section of the cooling tunnel
- **14 )**: compartment door of the third section of the cooling tunnel
- **15)**: electronic control and monitoring centre
- **16)**: upper blowers above the roller unit
- **17)**: lower blowers below the roller unit
- **18)**: crack in the glass
- **19)**: base surface
- **20)**: microphones and vibration sensors
- **21)**: microphones and vibration sensors detection area
- **22)**: visual alarms

## Claims

1. Method for controlling the thermal tempering of glass sheets in thermal tempering devices consisting of roller units (2) for consecutively conveying the sheets (3) through a tunnel (1) with a first heating area (4) and a second sudden cooling area (5) for inducing tensions in the glass material which physiologically determine the temper thereof but can abnormally cause the breaking thereof which leads to the disintegration of the sheet into granules typical of tempered glass, **characterised in that** it comprises the steps of: dividing the cooling area (5) into sections; subjecting each section (6, 7, 8) to acoustic and/or vibrations detection devices (20); detecting the occurrence of sound and/or vibration perturbations deriving from the breaking of the glass (3); reporting the detection to the operator, indicating the detection section (6, 7, 8).

2. Method according to claim 1 **characterised in that** it comprises the steps run and controlled by an electronic logic (15) of:
- dividing the cooling area (5) into consecutive sections (6, 7, 8) with reference to the conveying direction;
- subjecting each section (6, 7, 8) of the cooling area(5) to detection area (21) for acoustic detection devices - microphones (20) calibrating them on the background noise of the machine;
- and/or subjecting each section (6, 7, 8) of the cooling area (5) to detection area (21) for vibration sensors (20) calibrated to detection zero with respect to the physiological vibrations of the machine;
- selectively detecting the sound perturbation peaks with respect to the background noise of the machine deriving from breakage (18) of the glass (3) in a cooling step in each detection area (21);
- and/or selectively detecting the vibration anomalies with respect to the physiological vibrations of the operation of the machine deriving from breakage (18) of the glass (3) in a cooling step in each detection area (21);
- electronically processing and interpolating the detections to identify the microphones and/or the vibration detector (20) which maximised the sound and/or vibration perturbation detection, and/or the microphones and/or the vibration detectors (20) which maximised the sound and/or vibration perturbation detection;
- blocking or not blocking the tempering process as a function of the pre-set parameters;
- reporting to the operator the detection of a sound perturbation peak and/or vibration anomalies with visual and/or acoustic means (22);
- indicating to the operator the microphone (20) which maximised the sound perturbation detection and/or the vibration sensor (20) which maximised the detection of vibration anomaly or the detection section (6, 7, 8) with visual means (22) possibly including the reproduction - on a monitor (15) - of the reference detection area (21);
- deactivating and reactivating control functions for targeted action for cleaning the section (6, 7, 8) and removing the broken sheet.

3. Method according to the preceding claim **characterised in that** the detection data are stored in databases in an interpolated fashion with the production parameters and relevant recordings and managed by artificial intelligence.

4. Method according to the preceding claims **characterised in that** the calibrations of said acoustic detection devices (20) on the background noise of the machine and/or said vibration sensors (20) with respect to the physiological vibrations of the operation of the machine are self-implemented upon variation of the background noise and of the physiological vibrations of the operation of the machine.

5. Method according to the preceding claims **characterised in that** the indication - to the operator - of the acoustic microphone detector and/or vibration sensor (20) which maximised the sound perturbation detection and/or the vibration anomaly or the detection section (6, 7, 8) with visual means (22) comprises the reproduction - on a monitor (15) - of the reference detection area (21) through automatic visual means which frame - as the scene area - the portion of the plane (19) underlying the roller unit (3) corresponding to the acoustic detection section (6, 7, 8) and/or vibrations for detecting the glass granules that have fallen thereon following the breaking of the sheet (3).

6. Method according to the preceding claim **characterised in that** said method for detecting the acoustic and/or vibrations of the breaking of the glass is assisted by the artificial optical detection method forming the portions of the plane (19) underlying the roller unit (3) corresponding to the sections (6, 7, 8) for the acoustic and/or vibration detection such as scene areas for the detection of the fall of the granules deriving from the deflagration of the glass by a plurality of optical sensors and/or laser devices.

7. Device for implementing the method according to claims 1 to 5 **characterised in that** it comprises a plurality of acoustic and/or vibration detection means (20) associated as respective section detection fields (6, 7, 8) of the conveying line (2) of the cooling area (5); means (22) for signalling - to the external - acoustic detections in the sections (6, 7, 8) of the conveying line (2) of the cooling area (5).

8. Device for implementing the method according to claims 1 to 5 **characterised in that** it comprises:
- a plurality of acoustic and/or vibration detection means (20) with respective detection fields (21) consisting of consecutive sections (6, 7, 8) of the chamber (19) underlying the roller conveying line (2) of the cooling area (5) of a tunnel (1) for the thermal tempering of the glass (3);
- electronic means for processing acoustic and/or vibration detections in the detection fields (21); means (22) for signalling - to the external - the occurrence of sound perturbation peaks exceeding the background noise and/or the vibration anomaly with respect to the physiological vibrations of the operation of the machine in the detection fields (21);
- electronic means for comparing the acoustic and/or vibration detections of the various detectors for identifying the predominant detection in terms of intensity;
- means for possibly blocking the tempering process and specific reference - to the external - of which detection field (21) was subjected to predominant detection;
- means for electrically storing the detections on the detection fields and comparison with other tempering process parameters detected according to the prior art;
- run and control electronic means for automatically implementing the steps of the method.

9. Device according to the preceding claims **characterised in that** said acoustic and/or vibration detection means (20) consist of accelerometers.

10. Device for implementing the method according to claims 1 to 5 **characterized in that** it comprises automatic vision devices which frame - as scene area - the portion of the plane (19) underlying the roller unit (3) corresponding to the acoustic and/or vibration detection section (6, 7, 8).

11. Device for implementing the method according to claims 1 to 5 **characterised in that** the portions of the plane (19) underlying the roller unit (3) corresponding to the acoustic detection sections (6, 7, 8) form scene areas for the automatic optical detection of the fall of the granules deriving from the deflagration of the glass by a plurality of optical sensors and/or laser devices
